# EUROPÄISCHE PATENTANMELDUNG

(11) **EP 1 859 768 A1**
(43) Veröffentlichungstag der Anmeldung: **28.11.2007**
(21) Anmeldenummer: 07004294.0
(22) Anmeldetag: 02.03.2007
(51) Int. Cl.: A61G 7/015, A47C 23/00, A47C 23/06

(54) **Lattenrost**

(30) Priorität: 26.05.2006 DE 202006008525 U; 26.05.2006 DE 202006008526 U; 26.05.2006 DE 202006008524 U
(71) Anmelder: spiroplex GmbH, 33415 Verl (DE)
(72) Erfinder: Bock, Klaus, 33915 Verl (DE)
(74) Vertreter: Stenger, Watzke & Ring

(57) **Zusammenfassung**

Die Erfindung betrifft einen Lattenrost mit einem Tragrahmen und daran angeordneten Latten. Um einen neuartigen Lattenrost bereitzustellen, wird mit der Erfindung vorgeschlagen, daß die Latten (8) ihrerseits daran auswechselbar angeordnete Federelemente (9) tragen, wobei die Latten (8) aus Holz und die Federelemente (9) aus Kunststoff bestehen.

## Beschreibung

Die Erfindung betrifft einen Lattenrost mit einem Tragrahmen und daran angeordneten Latten.

Lattenroste als solche sind aus dem Stand der Technik hinlänglich bekannt, weshalb es eines gesonderten druckschriftlichen Nachweises an dieser Stelle nicht bedarf.

Obgleich sich die aus dem Stand der Technik vorbekannten Lattenroste im alltäglichen Praxiseinsatz bewährt haben, besteht nach wie vor Verbesserungsbedarf.

Es ist deshalb die **Aufgabe** der Erfindung, einen neuartigen Lattenrost vorzuschlagen.

Zur **Lösung** dieser Aufgabe wird mit der Erfindung ein Lattenrost vorgeschlagen, der einen Tragrahmen mit daran angeordneten Latten aufweist und sich dadurch auszeichnet, daß die Latten ihrerseits daran auswechselbar angeordnete Federelemente tragen, wobei die Latten aus Holz und die Federelemente aus Kunststoff bestehen.

Der erfindungsgemäße Lattenrost besteht in an sich bekannter Weise aus einem Tragrahmen, welcher mehrere und beabstandet zueinander angeordnete Latten trägt, die beispielsweise als Federlatten ausgebildet sein können. Erfindungsgemäß tragen die Latten ihrerseits Federelemente, wobei die Latten aus Holz und die Federelemente aus Kunststoff bestehen.

Die Federelemente dienen der federelastischen Aufnahme einer Matratze, eines Polsterelements oder dergleichen. Die Matratze, das Polsterelement oder dergleichen ist also nicht direkt auf die Latten des Lattenrostes aufgelegt. Die Auflagerfläche für die Matratze, das Polsterelement oder dergleichen bilden vielmehr die Federelemente, die an den Latten des Lattenrostes angeordnet sind. Die Zwischenordnung von Federelementen zwischen den Latten des Lattenrostes einerseits und der von dem Lattenrost mit aufgenommenen Matratze, dem Polsterelement oder dergleichen bietet den Vorteil eines erhöhten Liege- und/oder Sitzkomforts.

Der Lattenrost trägt insgesamt eine Vielzahl von Federelementen, die reihen- und/oder spaltenförmig angeordnet sind. Dabei können Federelemente mit unterschiedlichen Federeigenschaften eingesetzt werden, so daß mit Bezug auf die vom Lattenrost bereitgestellte Sitz- und/oder Liegefläche Zonen mit zueinander unterschiedlich ausgebildetem Federungskomfort bereitgestellt werden können. Insbesondere mit Bezug auf Kranken- und/oder Pflegebetten ist diese Ausgestaltung von Vorteil.

Federelemente der vorbeschriebenen Art sind aus dem Stand der Technik an sich nicht unbekannt. Diese sind vorzugsweise als einstückiges Spritzgußteil aus Kunststoff ausgebildet. Für eine bestimmungsgemäße Bereitstellung der aus dem Stand der Technik vorbekannten Federelemente dienen beispielsweise plattenförmig ausgebildete Tragelemente, die gleichfalls aus Kunststoff ausgebildet sind. Diese Tragelemente dienen quasi als Grundplatte zur Anordnung der Federelemente und werden ihrerseits von einem Tragrahmen oder -gerüst gehalten.

Der vorbeschriebenen Konstruktion haftet insbesondere der Nachteil der hohen Herstellungskosten an. Insbesondere die Herstellung der aus Kunststoff bestehenden Tragelemente zur Aufnahme der Federelemente ist aufwendig und kostenintensiv. Dieser dem Stand der Technik anhaftende Nachteil wird mit dem erfindungsgemäßen Lattenrost überwunden, da hier die Federelemente von aus Holz bestehenden Latten getragen sind.

Daß die Latten eines Lattenrostes aus Holz bestehen, ist aus dem Stand der Technik gleichfalls nicht unbekannt. Die vorbekannten Latten sind als federelastische Latten ausgebildet und bestehen beispielsweise aus Schichtholz. Die durch den Lattenrost bereitgestellte federnde Abstützung einer Matratze, eines Polsterelements oder dergleichen wird allein durch die federelastisch ausgebildeten Latten des Lattenrosts bewerkstelligt.

Aus dem Stand der Technik ist es bislang nicht bekannt, aus Holz bestehende Latten einerseits mit aus Kunststoff bestehenden Federelementen andererseits zu kombinieren, um so unter gleichzeitiger Vermeidung der den vorbekannten Systemen anhaftenden Nachteile sowohl die Vorteile eines Federelements als auch die Vorteile einer aus Holz bestehenden Latte zu nutzen. Im Gegenteil: In den letzten Jahren sind verstärkt Anstrengungen unternommen worden, die Latten eines Lattenrostes aus Kunststoff herzustellen. Diese durchaus praxisgerechten Konstruktionen sind aber äußerst aufwendig und teuer in der Herstellung. Der erfindungsgemäße Lattenrost schafft hier Abhilfe, denn es wird mit diesem ein Konstruktionssystem vorgeschlagen, gemäß welchem aus Holz bestehende Latten mit aus Kunststoff bestehenden Federelementen kombiniert werden.

Gemäß einem weiteren Merkmal der Erfindung besteht der Tragrahmen des Lattenrostes aus Metall, vorzugsweise aus Aluminium. Der erfindungsgemäße Lattenrost kombiniert also drei unterschiedliche Materialien miteinander. Der Tragrahmen besteht aus Aluminium, die Latten sind aus Holz gebildet und die Federelemente bestehen aus Kunststoff. Mit Bezug auf die bei einer bestimmungsgemäßen Verwendung eines Lattenrostes auftretenden Beanspruchungen stellt diese Materialkombination eine optimierte Ausgestaltung dar, was eine langlebige und zuverlässige Funktionsweise des Lattenrostes sicherstellt. Darüber hinaus läßt sich ein solcher Lattenrost vergleichsweise preisgünstig bei gleichzeitig hohen Qualitätsansprüchen herstellen.

Der erfindungsgemäße Lattenrost ermöglicht in vorteilhafter Weise die Einstellung unterschiedlicher Sitz- und/oder Liegepositionen. Zu diesem Zweck verfügt der Lattenrost über einen Halterahmen, der den Tragrahmen aufnimmt. Dabei besteht der Tragrahmen vorzugsweise aus einzelnen Rahmensegmenten, die relativ zueinander verschwenkbar am Halterahmen angeordnet sind. So kann beispielsweise vorgesehen sein, daß der Tragrahmen aus insgesamt drei Rahmensegmenten besteht, und zwar einem Kopfsegment, einem Mittelsegment sowie einem Fußsegment. Dabei sind sowohl das Kopf- als auch das Fußsegment relativ verschwenkbar zum Halterahmen an diesem angeordnet. Eine individuelle Sitz- und/oder Liegeposition kann so vom Lattenrost wunschgemäß bereitgestellt werden, wobei eine Verstellung der Rahmensegmente beispielsweise ferngesteuert über Motorkraft erfolgen kann. Es versteht sich dabei von selbst, daß der Tragrahmen auch mehr als nur drei Rahmensegmente umfassen kann. Denkbar sind beispielsweise vier, fünf oder noch mehr Rahmensegmente, wobei mit zunehmender Anzahl der Rahmensegmente die vom Lattenrost bereitgestellten Verstellmöglichkeiten zunehmen.

Da der Tragrahmen vorzugsweise aus Aluminium, die Latten hingegen aus Holz bestehen, bedarf es im besonderen ausgestalteter Halter zur Anordnung der Latten am Tragrahmen.

Gemäß einem weiteren Merkmal der Erfindung ist der Lattenrost durch einen Halter zur einendseitigen Anordnung einer Latte am Tragrahmen gekennzeichnet. Eine jede Latte wird zur Anordnung am Tragrahmen endseitig mit einem Halter bestückt. Zur Anordnung einer Latte am Tragrahmen bedarf es also zweier Halter. Bevorzugterweise ist ein Halter als einstückiges Spritzgußteil aus Kunststoff ausgebildet und weist einen Befestigungsabschnitt einerseits und einen Aufnahmeabschnitt andererseits auf.

Der Befestigungsabschnitt des Halters dient zur Anordnung desselben am Tragrahmen. Der Aufnahmeabschnitt des Halters dient zur einendseitigen Anordnung einer Latte, so daß der Halter als Verbindungselement zwischen Latte einerseits und Tragrahmen andererseits fungiert.

Der Befestigungsabschnitt des Halters ist bevorzugterweise U-förmig ausgebildet und kann klemmend am Tragrahmen festgelegt werden. Weiterer Befestigungsmittel in Form von Schrauben, Nieten oder dergleichen bedarf es insofern nicht.

Gemäß einem weiteren Merkmal der Erfindung ist vorgesehen, daß der Halter ein in den Aufnahmeabschnitt einsetzbares Dämpfungselement aufweist. Dieses Dämpfungselement ist einstückig ausgebildet und besteht vorzugsweise aus einem federelastischen Kunststoffmaterial. Sinn und Zweck dieses Dämpfungselementes ist es, Kontaktgeräusche zwischen Latte einerseits und Halter andererseits zu vermeiden. Die Latte wird also unter Zwischenordnung des Dämpfungselements vom Aufnahmeabschnitt des Halters aufgenommen. Ferner dient das federelastische Dämpfungselement dazu, einen verrutschsicheren Sitz des endseitigen Abschnitts einer Latte innerhalb des Aufnahmeabschnitts des Halters auszubilden.

Der vorbeschriebene Halter ist für sich genommen erfinderisch. Er besteht aus einem Befestigungsabschnitt einerseits sowie einem Aufnahmeabschnitt andererseits. Der Befestigungsabschnitt dient der Anordnung des Halters an einem Tragprofil, beispielsweise eines Tragprofils eines Tragrahmens eines Lattenrostes. Der Aufnahmeabschnitt dient hingegen zur einendseitigen Aufnahme einer Latte. Der erfindungsgemäße Halter stellt mithin das Verbindungselement zwischen Latte einerseits und Tragprofil eines Tragrahmens eines Lattenrostes andererseits dar. Erfindungsgemäß ist der Halter als einstückiges Bauteil ausgebildet, was zum einen eine vereinfachte Herstellung und zum anderen eine vereinfachte Lattenmontage bzw. -demontage ermöglicht.

Zur Anordnung einer Latte an einem Tragprofil eines Tragrahmens eines Lattenrostes dienen zwei Halter. Im montierten Zustand wird eine Latte links- wie rechtsseitig, das heißt einendseitig wie anderendseitig von jeweils einem Halter abgestützt, der seinerseits am zugehörigen Tragprofil des Tragrahmens des Lattenrostes angeordnet ist. Die Verwendung eines Halters nach der Erfindung bietet dabei zudem den Vorteil, unterschiedliche Materialien hinsichtlich der Latte sowie bezüglich des Tragprofils des Tragrahmens des Lattenrostes verwenden zu können. Insbesondere deshalb, weil der Halter weder mit der Latte noch mit dem Tragprofil verschraubt, verklebt, verschweißt oder sonstwie unter Verwendung zusätzlicher Befestigungsmittel verbunden wird. Der Halter wird dank seines Befestigungsabschnittes vielmehr auf das Tragprofil des Tragrahmens aufgeklemmt. Der Aufnahmeabschnitt weist einen Aufnahmeraum auf, in die die Latte einendseitig eingeschoben wird. Zusätzlicher Verbindungsmittel bedarf es insofern nicht, so daß die Latte beispielsweise aus Kunststoff oder Holz und das Tragprofil des Tragrahmens aus Metall, im Bedarfsfall auch aus Holz oder Kunststoff bestehen kann. Hinsichtlich der eingesetzten Materialien bestehen dank des erfindungsgemäßen Halters also keinerlei Einschränkungen.

Der als einstückiges Bauteil ausgebildete Halter besteht vorzugsweise aus Kunststoff und ist als Spritzgußteil ausgebildet. Dies ermöglicht eine kostengünstige Herstellung, insbesondere mit Blick auf eine Massenproduktion.

Gemäß einem weiteren Merkmal der Erfindung ist der Halter durch ein in den Aufnahmeabschnitt einsteckbares Dämpfungselement gekennzeichnet. Das Dämpfungselement besteht vorzugsweise aus einem weichelastischen Kunststoff, wobei die Latte einendseitig unter Zwischenordnung des Dämpfungselements in den Aufnahmeabschnitt des Halters eingesteckt werden kann. Die Anordnung eines solchen Dämpfungselements erfüllt im wesentlichen zwei Vorteile. Zum einen sorgt das Dämpfungselement aufgrund seiner vorzugsweise elastischen Ausgestaltung für eine eingespannte Anordnung der einendseitig in den Aufnahmeabschnitt des Halters eingeschobenen Latte. Auf diese Weise wird eine formschlüssige Verbindung zwischen Halter einerseits und endseitigem Abschnitt einer Latte andererseits erreicht. Das Dämpfungselement bietet ferner den Vorteil, daß unter Umständen störende Kontaktgeräusche vermieden werden, weil im montierten Zustand kein direkter Materialkontakt zwischen Halter einerseits und Latte andererseits besteht.

Gemäß einem weiteren Merkmal der Erfindung weist der Befestigungsabschnitt eine im Querschnitt U-förmige Ausgestaltung auf, wobei die am Tragprofil im montierten Zustand zugewandte - Innenseite des Befestigungsabschnitts korrespondierend zur Außenkontur des Tragprofils ausgebildet ist. Im montierten Zustand umgreift der Befestigungsabschnitt des Halters das Tragprofil des Tragrahmens zumindest teilweise, und zwar aufgrund der korrespondierenden Ausgestaltung von Innenseite des Befestigungsabschnitts und Außenseite des Tragprofils im wesentlichen formschlüssig. Ein fester Sitz des Halters am Tragprofil des Tragrahmens ist so gewährleistet.

Der Befestigungsabschnitt weist gemäß einem weiteren Merkmal der Erfindung eine nach Art eines Fortsatzes ausgebildete Rückhaltekante auf, die im montierten Zustand in eine am Tragprofil ausgebildeten Nut eingreift. Ein unbeabsichtigtes Lösen des Halters vom Tragprofil ist so gewährleistet.

Des weiteren kann vorgesehen sein, daß der Befestigungsabschnitt eine Nut aufweist, in die im montierten Zustand ein am Tragprofil angeordneter Anschlußsteg eingreift. Auch diese Ausgestaltung dient der sicheren Anordnung des Halters am Tragprofil.

Wie vorstehend beschrieben, umgreift der im Querschnitt U-förmig ausgestaltete Befestigungsabschnitt des Halters das Tragprofil zumindest teilweise. Der Befestigungsabschnitt wird ohne zusätzliche Befestigungsmittel durch Aufklemmen am Tragprofil befestigt. Diese Art der Befestigung hat den Vorteil, daß der Halter nach seiner Anordnung am Tragprofil in Längsrichtung des Tragprofils verschoben werden kann. Dabei ist aufgrund der klemmenden Anordnung des Halters am Tragprofil ein gewisser Kraftaufwand erforderlich, um eine Verschiebung des Halters in Längsrichtung des Tragprofils bewerkstelligen zu können. Es ist also sichergestellt, daß sich der Halter nicht ungewollt relativ gegenüber dem Tragprofil verschiebt. Gleichwohl ist eine gewollte Verschiebung möglich, so daß der erfindungsgemäße Halter den Vorteil bietet, den Abstand zwischen zwei am Tragprofil angeordneten Latten individuell einstellen zu können.

Die vorzugsweise auswechselbar an den Latten angeordneten Federelemente bestehen jeweils aus einem Federkörper sowie einer daran auswechselbar angeordneten Kopfplatte. Mit Bezug auf die Höhenerstreckung des Lattenrostes bilden im endfertig montierten Zustand des Lattenrostes die Kopfplatten der Federelemente in ihrer Gesamtheit die Auflagefläche für eine vom Lattenrost aufzunehmende Matratze, ein vom Lattenrost aufzunehmendes Polsterelement oder dergleichen.

Der Federkörper des Federelements verfügt über Federarme, die sich ausgehend von einem Basisabschnitt vorzugsweise wendelfömig in Höhenrichtung nach oben erstrecken. Die wendelförmige Ausgestaltung der Federarme hat den Vorteil, daß der Federkörper einen hinsichtlich seines möglichen Federweges nur geringen Aufbau in Höhenrichtung aufweist und das Federelement darüber hinaus quasi auf "Null" zusammengedrückt werden kann. Der benötigte Einbauraum ist in vorteilhafter Weise gering.

Der Basisabschnitt des Federkörpers trägt lattenseitig einen stiftförmigen Fortsatz. Dieser dient der Anordnung eines Federelements an einer Latte.

Korrespondierend zum stiftförmigen Fortsatz des Federelements ist die Latte zur Anordnung eines Federelements mit einer Durchgangsbohrung versehen. Im montierten Zustand des Lattenrostes greift der stiftförmige Fortsatz eines Federelements in diese von einer Latte bereitgestellten Bohrung ein. Zur Vermeidung ungewünschter Kontaktgeräusche erfolgt die Anordnung eines Federelements an einer Latte vorzugsweise unter Zwischenordnung eines aus einem weichelastischen Kunststoffmaterial bestehenden Zwischenelements. Dabei ist das Federelement vorzugsweise verdrehsicher gegenüber dem Zwischenelement und das Zwischenelement verdrehsicher gegenüber der Latte angeordnet. Eine ungewollte Verdrehung eines Federelements gegenüber der es tragenden Latte ist so wirkungsvoll unterbunden. Es sind aber auch solche Ausgestaltungen des Federelements denkbar, die aufgrund ihrer symmetrischen Ausgestaltung nicht zwingend verdrehsicher angeordnet sein müssen, weil eine dann mögliche Verdrehung ohne Nachteil ist.

Der stiftförmige Fortsatz eines jeden Federelements trägt lattenseitig eine kugelförmige Erweiterung. Diese kugelförmige Erweiterung wird von einer im Zwischenelement entsprechend ausgebildeten Bohrung aufgenommen, so daß die kugelförmige Erweiterung quasi wie ein Gelenkkugelzapfen in dem Zwischenelement gelagert ist. Diese Ausgestaltung erlaubt es in vorteilhafter Weise, daß sich die Federelemente in Relation zur Latte leicht neigen können, was einen verbesserten Federungskomfort bewirkt.

Das vorgenannte Zwischenelement, das auch als Verbindungselement bezeichnet werden kann, ist für sich selbst erfinderisch. Es wird vorgeschlagen ein Verbindungselement zur auswechselbaren Anordnung eines Funktionselements, beispielsweise in Form eines Federelements, an einem Tragelement, beispielsweise in Form einer Latte, mit einem in eine Bohrung des Tragelements einsetzbaren und einen Aufnahmeraum zur Aufnahme eines am Funktionselement angeordneten Verbindungsabschnitts bereitstellenden Basisabschnitt, wobei der Aufnahmeraum eine kugelförmige Erweiterung aufweist.

Das erfindungsgemäße Zwischenelement, das heißt Verbindungselement ist als reines Steckteil ausgebildet und kann als Koppelelement bezeichnet werden, das bei einer bestimmungsgemäßen Verwendung das Funktionselement mit dem Tragelement verbindet. Das Verbindungselement weist einen stopfenförmigen Basisabschnitt auf, der in eine entsprechend am Tragelement ausgebildete Bohrung einsetzbar ist. Dabei trägt der Basisabschnitt außenumfangsseitig vorzugsweise Rastmittel, so daß eine verdrehsichere Anordnung des Basisabschnitts am Tragelement gewährleistet ist. Zudem kann vorgesehen sein, daß der vorzugsweise im Querschnitt im wesentlichen kreisförmige Basisabschnitt gegenüber der am Tragelement ausgebildeten Bohrung zumindest bereichsweise ein Übermaß aufweist, so daß der Basisabschnitt sich nach einem Einbringen in die am Tragelement ausgebildete Bohrung einklemmt. In diesem Zusammenhang wird darüber hinaus vorgeschlagen, daß der Basisabschnitt aus einem elastisch verformbaren Kunststoff besteht, was zum einen ein Einführen des Basisabschnitts in die vom Tragelement bereitgestellte Bohrung vereinfacht und zum anderen einen durch Vorspannung des Basisabschnitts festklemmenden Sitz des Basisabschnitts in der vom Tragelement bereitgestellten Bohrung unterstützt.

Der Basisabschnitt des Verbindungselements stellt erfindungsgemäß einen Aufnahmeraum zur Verfügung. Dieser Aufnahmeraum dient der Aufnahme eines am Funktionselement verbindungselementseitig angeordneten Verbindungsabschnitts. Bevorzugterweise ist deshalb der am Funktionselement angeordnete Verbindungsabschnitt korrespondierend zu dem vom Basisabschnitt bereitgestellten Aufnahmeraum ausgebildet.

Erfindungsgemäß weist der vom Basisabschnitt bereitgestellte Aufnahmeraum eine kugelförmige Erweiterung auf. Im montierten Zustand greift in diese kugelförmige Erweiterung ein verbindungselementseitig am Verbindungsabschnitt des Funktionselements angeordneter Kugelkopf ein. Auf diese Weise entsteht nach Art eines Kugelgelenks eine Verbindung zwischen Verbindungselement einerseits und Funktionselement andererseits. Diese erfindungsgemäße Ausgestaltung erlaubt es in vorteilhafter Weise, daß das Funktionselement bei bestimmungsgemäßer Anordnung am Tragelement unter Verwendung des erfindungsgemäßen Verbindungselements neigungsfähig gelagert ist.

Zur Erzielung einer verdrehsicheren Anordnung des Funktionselements gegenüber dem Verbindungselement trägt der Basisabschnitt des Verbindungselements einen vorzugsweise stegförmig ausgebildeten Fortsatz, der in den vom Basisabschnitt bereitgestellten Aufnahmeraum hineinragt. Der verbindungselementseitig am Verbindungsabschnitt des Funktionselements angeordnete Kopf trägt einen korrespondierend zum stegförmigen Fortsatz des Basisabschnitts des Verbindungselements ausgebildeten Schlitz. Im montierten Zustand von Funktionselement einerseits und Verbindungselement andererseits greift der am Basisabschnitt des Verbindungselements angeordnete Fortsatz in den Schlitz des am Verbindungsabschnitt des Funktionselements angeordneten Kopf, wodurch eine verdrehsichere Anordnung zwischen Verbindungselement einerseits und Funktionselement andererseits sichergestellt ist. Das Funktionselement ist somit bei gleichzeitig verdrehsicherer Anordnung am Verbindungselement neigungsfähig am Tragelement gelagert.

Gemäß einem weiteren Merkmal der Erfindung verfügt das Verbindungselement über einen Aufsatzabschnitt, der vorzugsweise einstückig am Basisabschnitt angeordnet ist. Dieser Aufsatzabschnitt ist plattenförmig ausgebildet und liegt im montierten Zustand des erfindungsgemäßen Verbindungselements oberseitig am Tragelement an. Das Funktionselement liegt also unter Zwischenordnung des Aufsatzabschnittes des Verbindungselements am Tragelement an, so daß ungewollte Kontakt- oder Klappergeräusche infolge eines direkten Kontakts zwischen Funktionselement einerseits und Tragelement andererseits unterbunden sind. Insofern kann der Aufsatzabschnitt des Verbindungselements auch als Dämpfungselement bezeichnet werden.

Gemäß einem weiteren Merkmal der Erfindung trägt der Aufsatzabschnitt basisabschnittseitig stiftförmige Fortsätze. Im montierten Zustand greifen diese Fortsätze, die beispielsweise nach Art eines Doms ausgebildet sein können, in korrespondierend am Tragelement ausgebildete Bohrungen ein. Auf diese Weise wird eine zusätzliche Verdrehsicherung des Verbindungselements gegenüber dem Tragelement erreicht.

Gemäß einem weiteren Merkmal der Erfindung weist der Aufsatzabschnitt eine Durchgangsbohrung auf. Diese Durchgangsbohrung stellt quasi die Zutrittsöffnung zum vom Basisabschnitt des Verbindungselement bereitgestellten Aufnahmeraum dar. Der am Funktionselement angeordnete Verbindungsabschnitt wird kopfseitig voran durch die Durchgangsbohrung des Aufsatzabschnittes hindurch in den vom Basisabschnitt des Verbindungselements bereitgestellten Aufnahmeraum hineingesteckt.

Die Anordnung eines Funktionselements an einem Tragelement unter Verwendung des erfindungsgemäßen Verbindungselements geht wie folgt von statten: Zunächst wird das Verbindungselement am Tragelement angeordnet. Zu diesem Zweck wird das Verbindungselement mit seinem Basisabschnitt voran in die korrespondierend zum Basisabschnitt am Tragelement ausgebildete Bohrung hineingesteckt. Aufgrund der vorbeschriebenen Ausgestaltung des Verbindungselements ist die Anordnung desselben am Tragelement verdrehsicher.

In einem zweiten Montageschritt wird nun das Funktionselement unter Zwischenordnung des Verbindungselements am Tragelement angeordnet. Zu diesem Zweck wird der am Funktionselement angeordnete Verbindungsabschnitt kopfseitig voran durch die im Aufsatzabschnitt des Verbindungselements ausgebildete Durchgangsbohrung hindurch in den vom Basisabschnitt des Verbindungselements bereitgestellten Aufnahmeraum eingeführt, und zwar derart, daß im endfertig montierten Zustand des Funktionselements der am Basisabschnitt angeordnete und in den Aufnahmeraum des Basisabschnitts hineinragende Fortsatz in den kopfseitig am Verbindungsabschnitt des Funktionselements ausgebildeten Schlitz eingreift. Im endmontierten Zustand ist das Funktionselement nun verdrehsicher am Verbindungselement angeordnet, wobei das Funktionselement in vorteilhafter Weise neigungsfähig gegenüber dem Tragelement gelagert ist, weil der kugelförmige Fortsatz des Verbindungsabschnitts des Funktionselements nach Art eines Kugelzapfens in der kugelförmigen Erweiterung des Aufnahmeraums des Basisabschnitts gelagert ist.

Mit der Erfindung wird insgesamt ein Lattenrost vorgeschlagen, der höchsten Ansprüchen genügt, gleichzeitig aber vergleichsweise preisgünstig in der Herstellung ist. Erstmals werden verschiedene Materialkomponenten kombiniert, was im Ergebnis zu einer optimierten Ausgestaltung hinsichtlich Herstellung und späteren Verwendungskomfort führt.

Mit der Erfindung wird des weiteren ein Bett, insbesondere ein Kranken- und/oder Pflegebett vorgeschlagen, das über einen Lattenrost der vorbeschriebenen Art verfügt.

Weitere Merkmale und Vorteile der Erfindung ergeben sich aus der nachfolgenden Beschreibung anhand der Fign. Dabei zeigen:
- Fig. 1: in schematisch perspektivischer Darstellung einen erfindungsgemäßen Lattenrost;
- Fig. 2: eine schematisch perspektivische Ausschnittsdarstellung des erfindungsgemäßen Lattenrosts;
- Fig. 3: eine schematische Seitenansicht des erfindungsgemäßen Lattenrosts;
- Fig. 4: in perspektivischer Darstellung einen Halter;
- Fig. 5: den Halter nach Fig. 4 in einer Seitenansicht;
- Fig. 6: den Halter nach Fig. 1 in einer frontseitigen Ansicht;
- Fig. 7: den Halter nach Fig. 4 in einer geschnittenen Seitenansicht gemäß der Schnittlinie VII-VII nach Fig. 6;
- Fig. 8: den Halter nach Fig. 4 in einer geschnittenen Draufsicht von oben gemäß Schnittlinie VIII-VIII nach Fig. 6;
- Fig. 9: in schematischer Perspektivdarstellung ein Dämpfungselement;
- Fig. 10: das Dämpfungselement nach Fig. 9 in einer frontseitigen Ansicht;
- Fig. 11: das Dämpfungselement nach Fig. 9 in einer geschnittenen Seitenansicht gemäß Schnittlinie XI-XI nach Fig. 10;
- Fig. 12: das Dämpfungselement nach Fig. 9 in einer Seitenansicht;
- Fig. 13: das Dämpfungselement nach Fig. 9 in geschnittener Seitenansicht gemäß Schnittlinie XIII-XIII nach Fig. 12;
- Fig. 14: in einer geschnittenen Seitenansicht einen Ausschnitt des erfindungsgemäßen Lattenrostes;
- Fig. 15: in einer schematisch perspektivischen Darstellung von oben einen Ausschnitt des erfindungsgemäßen Lattenrostes;
- Fig. 16: in einer schematisch perspektivischen Darstellung von unten einen Ausschnitt des erfindungsgemäßen Lattenrostes;
- Fig. 17: in einer weiteren schematisch perspektivischen Darstellung von unten einen Ausschnitt des erfindungsgemäßen Lattenrostes;
- Fig. 18: in einer schematisch perspektivischen Darstellung den Federkörper eines Federelements;
- Fig. 19: einen Federkörper nach Fig. 18 in einer Seitenansicht;
- Fig. 20: den Federkörper nach Fig. 18 in einer geschnittenen Seitenansicht gemäß Schnittlinie XX-XX nach Fig. 19;

- Fig. 21: den Federkörper nach Fig. 18 in einer Draufsicht von oben;
- Fig. 22: in schematisch perspektivischer Darstellung die Kopfplatte eines Federelements;
- Fig. 23: die Kopfplatte nach Fig. 22 in einer Seitenansicht;
- Fig. 24: in schematisch perspektivischer Darstellung ein Zwischenelement;
- Fig. 25: das Zwischenelement nach Fig. 24 in einer Draufsicht von oben;
- Fig. 26: das Zwischenelement nach Fig. 24 in einer geschnittenen Seitenansicht gemäß Schnittlinie XXVI-XXVI nach Fig. 25;
- Fig. 27: das Zwischenelement nach Fig. 24 in einer geschnittenen Seitenansicht gemäß Schnittlinie XXVII-XXVII nach Fig. 25;
- Fig. 28: in schematischer Schnittdarstellung ein an einer Latte angeordnetes Federelement und
- Fig. 29: ein Zwischenelement gemäß einer alternativen Ausgestaltungsform.

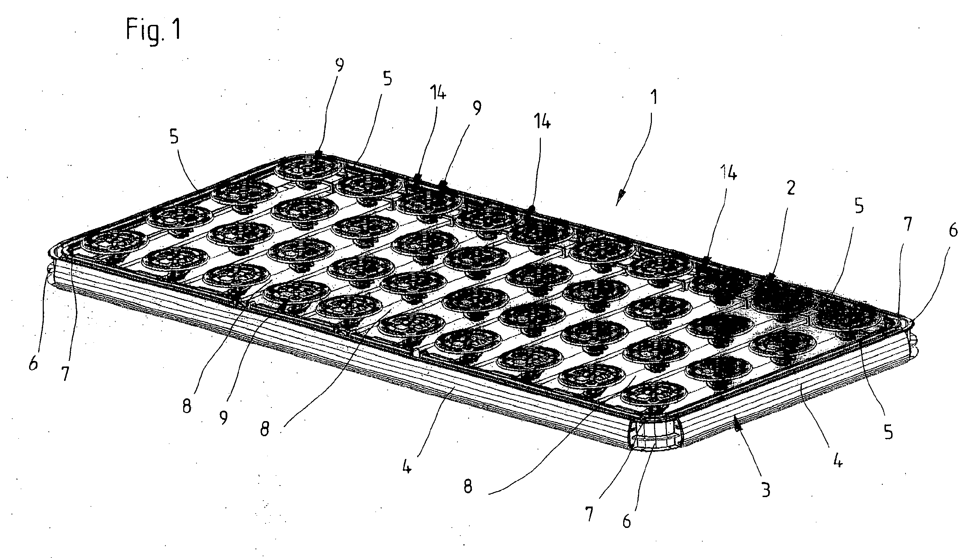

In Fig. 1 ist der erfindungsgemäße Lattenrost 1 in einer perspektivischen Ansicht dargestellt. Wie hier zu erkennen ist, umfaßt der Lattenrost 1 einen Halterahmen 3, der als äußerer Rahmen bezeichnet werden kann, sowie einen Tragrahmen 2, der als innerer Rahmen bezeichnet werden kann. Der Halterahmen 3 ist aus Profilen 4 gebildet, die mittels Verbindern 6 zusammengesteckt sind. Bei den Profilen 4 handelt es sich vorzugsweise um stranggepreßte Aluminiumprofile.

Der Tragrahmen 2 besteht aus insgesamt vier Rahmensegmenten 14: einem gegenüber dem Halterahmen 3 feststehenden mittleren Rahmensegment 14 sowie zwei relativ verschwenkbar am Halterahmen 3 angeordneten Rahmensegmenten 14, wobei das eine der verschwenkbar angeordneten Rahmensegmenten 14 den Kopfbereich und das andere der beiden verschwenkbar angeordneten Rahmensegmenten 14 den Fußbereich des Lattenrostes 1 darstellt.

Ein jedes Rahmensegment 14 ist aus Profilen 5 gebildet, die mittels Verbinder 7 aneinander angeschlossen sind. Auch die Profile 5 der Rahmensegmente 14 bestehen vorzugsweise aus Aluminium und sind als Strangpreßteile ausgebildet. Die Profile 5 können auch als Tragprofile 52 bezeichnet werden.

Der Tragrahmen 2 trägt eine Mehrzahl von Latten 8. Dabei umfaßt das mittlere Rahmensegment 14 zwei Latten 8, das mit Bezug auf die Zeichnungsebene nach Fig. 1 linke Rahmensegment 14 drei Latten 8 und das mit Bezug auf die Zeichnungsebene nach Fig. 1 rechte Rahmensegment 14 vier Latten 8. Die Latten 8 bestehen aus Holz.

Eine jede Latte 8 trägt oberseitig vier Federelemente 9, die - allgemein - auch als Funktionselemente 53 bezeichnet werden können. Die Federelemente 9 sind aus Kunststoff gebildet und vorzugsweise auswechselbar an den Latten 8 angeordnet. Insgesamt verfügt der Lattenrost 1 über 40 Federelemente 9, die in ihrer Gesamtheit die Auflagerfläche für eine Matratze, ein Polsterelement oder dergleichen bilden.

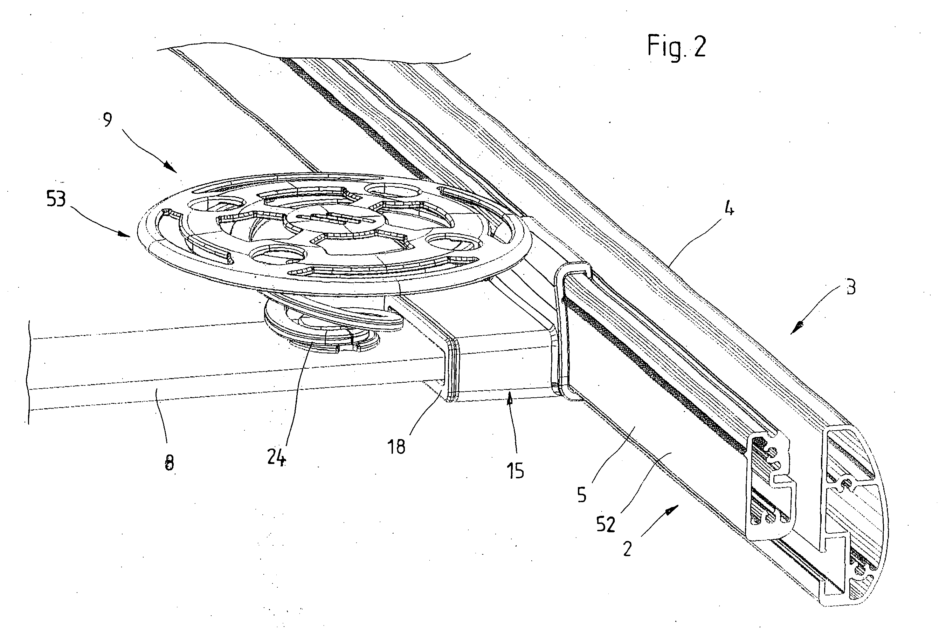

Fig. 2 zeigt in einer schematisch perspektivischen Teilansicht die Anordnung einer Latte 8 am Profil 5 des Tragrahmens 2. Zur einendseitigen Anordnung der Latte 8 am Tragrahmen 2 dient ein Halter 15. Dieser Halter 15 ist als einstückiges Spritzgußteil ausgebildet und stellt mit einem Aufnahmeabschnitt 17 einen Aufnahmeraum bereit, in den die Latte 8 endseitig unter Zwischenordnung eines Dämpfungselements 18 eingeschoben ist. Fig. 2 läßt des weiteren ein auf der Latte 8 angeordnetes Federelement 9 erkennen. Dieses ist unter Zwischenordnung eines Zwischenelements 24, das - allgemein - auch als Verbindungselement 54 bezeichnet werden kann, auf der Latte vorzugsweise verdrehsicher angeordnet. Sowohl das Zwischenelement 24 als auch das Dämpfungselement 18 dienen der Vermeidung ungewünschter Kontaktgeräusche.

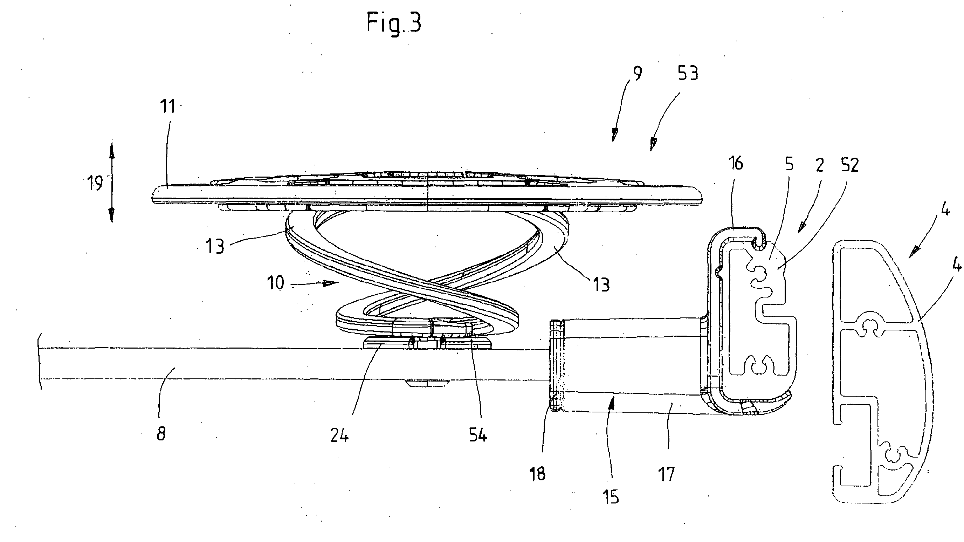

Fig. 3 zeigt die Darstellung nach Fig. 2 in einer Frontansicht. Auch aus dieser Darstellung ist zu erkennen, daß die Latte 8 einendseitig am inneren Rahmen, das heißt dem Tragrahmen 2 mittels des Halters 15 angeordnet ist. Insbesondere aus dieser Darstellung wird ersichtlich, daß der Halter 15 einen Aufnahmeabschnitt 17 sowie einen Befestigungsabschnitt 16 aufweist. Der Befestigungsabschnitt 16 ist im wesentlichen U-förmig ausgebildet und umgreift das Profil 5 des Tragrahmens 2 teilweise.

Des weiteren ist aus Fig. 3 zu erkennen, daß das Federelement 9 aus einem Federkörper 10 sowie einer daran vorzugsweise auswechselbar angeordneten Kopfplatte 11 besteht. Der Federkörper 10 verfügt seinerseits über wendelförmig ausgebildete Federarme 13, wobei der Federkörper 10 mit Bezug auf seine Höhenerstreckung 19 eine kegelförmige Gestalt aufweist.

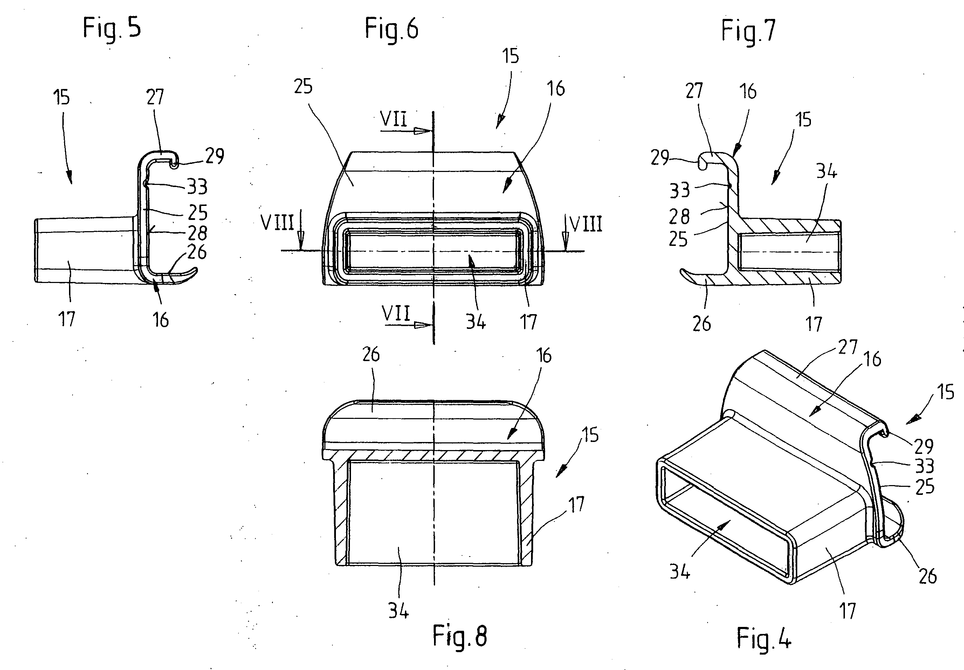

Die Fign. 4 bis 8 zeigen den Halter 15 im Detail. Es ist aus diesen Fign. zu erkennen, daß der Halter 15 als einstückiges Bauteil ausgebildet ist und über einen Aufnahmeabschnitt 17 sowie über einen Befestigungsabschnitt 16 verfügt.

Der Halter 15 ist in den Fign. 4 bis 8 in Alleinstellung in verschiedenen Ansichten gezeigt. Wie aus diesen Ansichten zu erkennen ist, ist der Halter 15 als einstückiges Spritzgußteil aus Kunststoff gebildet und besteht aus einem Aufnahmeabschnitt 17 und einem Befestigungsabschnitt 16.

Der Aufnahmeabschnitt 17 stellt einen Aufnahmeraum 34 bereit, der der endseitigen Aufnahme einer Latte 8 dient, vorzugsweise unter Zwischenordnung eines im weiteren noch beschriebenen Dämpfungselements 18. Wie insbesondere der perspektivischen Darstellung nach Fig. 4 zu entnehmen ist, ist der Aufnahmeabschnitt 12 nach Art eines einseitig offenen Kastens ausgebildet.

Der Befestigungsabschnitt 16 dient der Anordnung des Halters 15 an einem Tragprofil 52, wie dies beispielsweise als Profil 5 in den Fign. 2, 3 oder 14 gezeigt ist. Der Befestigungsabschnitt 16 ist im wesentlichen U-förmig ausgebildet und verfügt über eine Basis 25, an die sich ein erster Schenkel 26 und ein zweiter Schenkel 27 anschließen. Im montierten Zustand umgreift der U-förmig ausgebildete Befestigungsabschnitt 16 das Tragprofil 52, das heißt das Profil 5 zumindest teilweise, wie insbesondere den Fign. 3 und 14 entnommen werden kann.

Der eine Schenkel 27 des. Befestigungsabschnitts 16 trägt einendseitig eine nach Art eines Fortsatzes ausgebildete Rückhaltekante 29. Diese greift im montierten Zustand des Halters 15 in eine am Tragprofil 4 korrespondierend ausgebildete Nut 30 ein, wie insbesondere Fig. 14 erkennen läßt.

Das Tragprofil 52, das heißt das Profil 5 weist auf seiner der Innenseite 28 des Befestigungsabschnitts 16 zugewandten Seite einen vorzugsweise einstückig mit dem Tragprofil 4 ausgebildeten Anschlußsteg 32 auf. Dieser greift im montierten Zustand des Halters 15 in eine Nut 33 ein, die innenseitig der Basis 25 des U-förmig ausgebildeten Befestigungsabschnitts 16 ausgebildet ist.

Zur klemmenden Anordnung des Halters 15 am Tragprofil 52, das heißt am Profil 5 des Tragrahmens 2 wird zunächst die Rückhaltekante 29 des Befestigungsabschnitts in die am Profil 5 des Tragrahmens 2 ausgebildete Nut 30 eingesetzt. Alsdann wird der Halter 15 der Schwenkbewegung 51 nach Fig. 14 folgend nach unten verdreht, wobei der federelastisch ausgebildete untere Schenkel 26 des Befestigungsabschnitts leicht zurückweicht und im Zuge der Fortführung der Schwenkbewegung 51 über das Profil 5 schnappt. Im montierten Zustand nimmt der Halter 15 die in Fig. 14 gezeigte Stellung ein. In dieser Stellung ist er am Profil 5 des Tragrahmens 2 festgeklemmt. Zusätzlicher Befestigungsmittel, wie beispielsweise Schrauben, Nieten oder dergleichen bedarf es nicht.

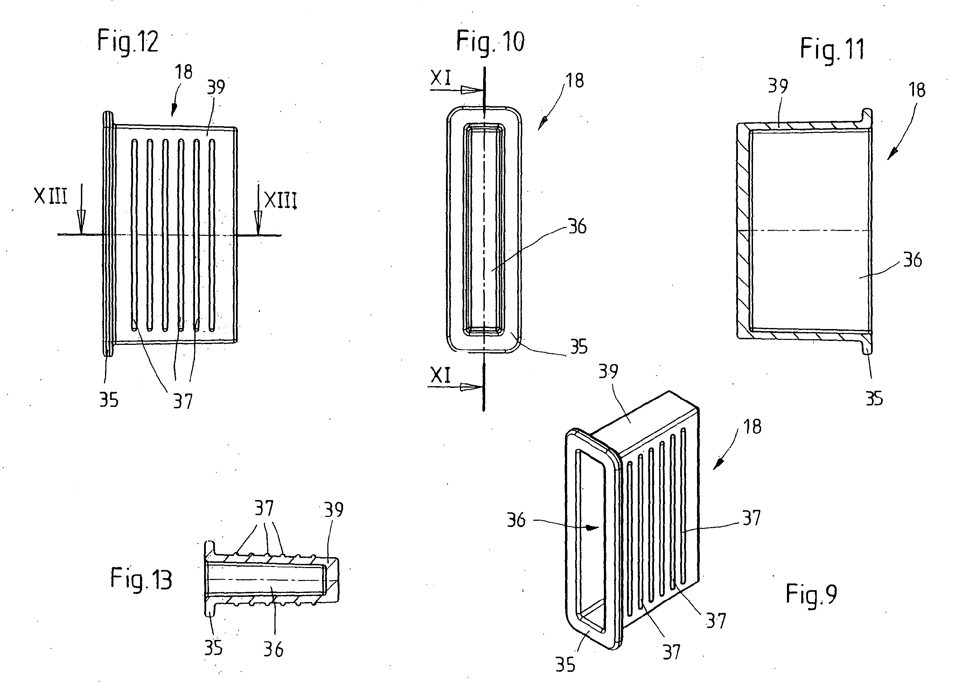

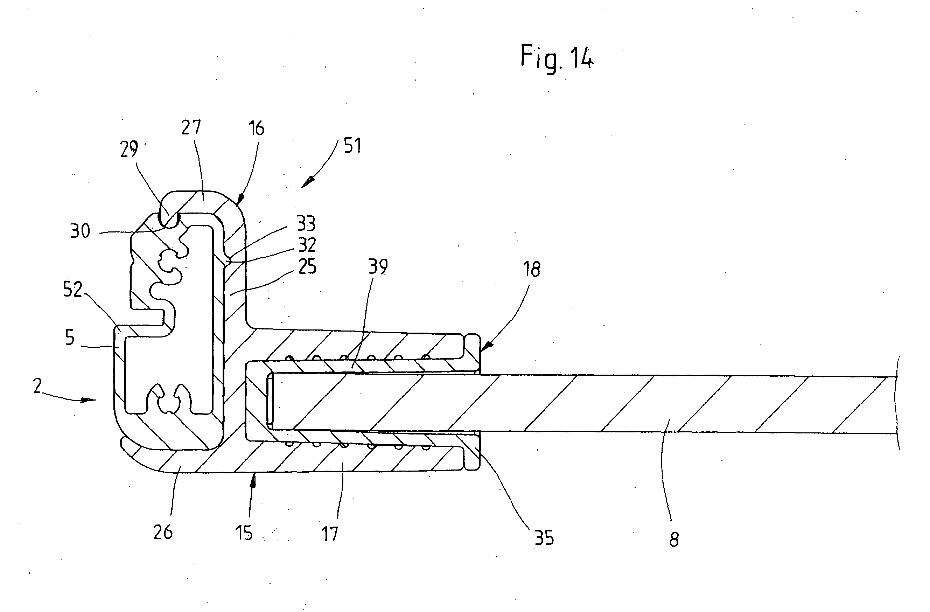

Wie der Fig. 14 des weiteren entnommen werden kann, ist die Latte 8 einendseitig unter Zwischenordnung eines Dämpfungselements 18 vom Aufnahmeabschnitt 17 des Halters 15 aufgenommen. Dieses Dämpfungselement 18 ist detailliert in den Fign. 9 bis 13 dargestellt.

Den Fign. 9 bis 13 ist zu entnehmen, daß das Dämpfungselement 18 aus einem kastenförmigen Grundkörper 39 gebildet ist. Der Grundkörper 39 stellt einen Aufnahmeraum 36 zur Verfügung, in welchen im montierten Zustand das einendseitige Ende der Latte 8 eingreift, wie insbesondere Fig. 14 entnommen werden kann. Um ein zu weites Einschieben des Dämpfungselements 18 in den vom Aufnahmeabschnitt 17 des Halters 15 bereitgestellten Aufnahmeraum 34 zu verhindern, trägt der Grundkörper 39 des Dämpfungselements 18 einendseitig einen umlaufenden Rand 35, wie dies beispielsweise auch Fig. 14 entnommen werden kann.

Für eine verrutschsichere Anordnung des Dämpfungselements 18 innerhalb des vom Aufnahmeabschnitt 17 des Halters 15 bereitgestellten Aufnahmeraums 34 verfügt der Grundkörper 39 des Dämpfungselements 18 außenseitig über Rippen 37.

Das Dämpfungselement 19, welches vorzugsweise einstückig ausgebildet ist, ist aus einem vorzugsweise weichelastischen Kunststoff gebildet. Die Anordnung eines einendseitigen Endes einer Latte 8 innerhalb des Aufnahmeabschnitts 17 des Halters 15 unter Zwischenordnung eines Dämpfungselements 18 bietet zum einen den Vorteil, daß ungewünschte Kontaktgeräusche vermieden werden können. Darüber hinaus ist das Dämpfungselement 18 insofern von Vorteil, als daß es bei einem Einführen eines einendseitigen Endes einer Latte 8 in den Aufnahmeabschnitt 17 des Halters 15 leicht elastisch verformt wird, so daß die Latte 8 unter einer gewissen Vorspannung vom Halter 15 getragen ist.

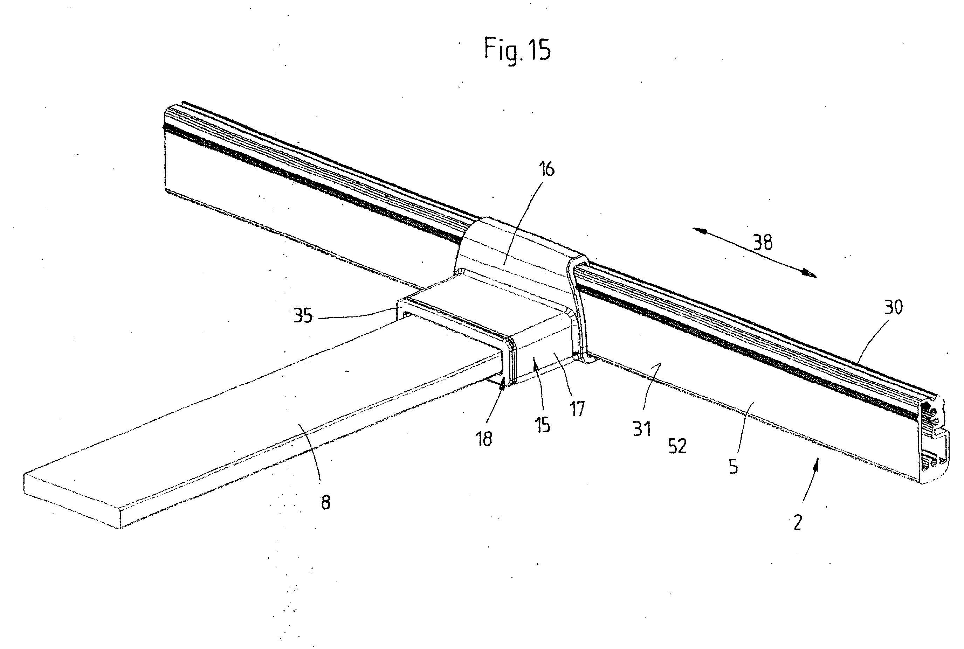

Fig. 15 zeigt in einer schematisch perspektivischen Darstellung die Anordnung einer Latte 8 am Profil 5 mittels des vorbeschriebenen Halters 15. Zu erkennen ist hier, daß die am Befestigungsabschnitt 16 des Halters 15 ausgebildete Rückhaltekante 29 in die vom Profil 5 bereitgestellte Nut 30 eingreift. Die Nut 30 ist in Längsrichtung 38 des Profils 5 durchgängig ausgebildet, was es erlaubt, den Halter 15 in Längsrichtung 38 des Profils 5 zu verschieben. Dabei stellt der Halter 15 eine solche Klemmkraft zur Verfügung, daß ein ungewolltes Verschieben des Halters 15 in Längsrichtung 38 des Profils 5 unterbunden ist. Unter einer gewissen Kraftanstrengung kann der Halter 15 gleichwohl aber verschoben werden, so daß es in vorteilhafter Weise möglich ist, den Halter 5 und damit die davon getragene Latte 18 wunschgemäß am Profil 5 zu positionieren. Insbesondere ist es aufgrund dieser Ausgestaltung möglich, den Abstand zwischen zwei benachbart zueinander angeordneten Latten individuell einstellen zu können.

Fig. 14 zeigt in einer geschnittenen Seitenansicht den Halter 15 im montierten Zustand. Es ist hier zu erkennen, daß der Halter 15 mittels seines Befestigungsabschnittes 16 am Tragprofil 52 durch Aufklemmen befestigt ist. Zusätzliche Befestigungsmittel sind nicht vorgesehen. Der Befestigungsabschnitt 16 des Halters 15 umgreift das Tragprofil.4-bereichsweise, wobei die Innenseite 28 des Befestigungsabschnitts 16 korrespondierend zur Außenkontur 31 des Tragprofils 52 ausgebildet ist. Zur Anordnung des Halters 15 am Tragprofil 52 wird die am Schenkel 27 des Befestigungsabschnitts 16 angeordnete Rückhaltekante 29 in die vom Tragprofil 52 bereitgestellte Nut 30 eingeführt. Alsdann wird der Halter 15 in einer Schwenkbewegung 51 verschwenkt, wobei der mit Bezug auf die Blattebene nach Fig. 14 untere Schenkel 26 des Befestigungsabschnitts 16 leicht federelastisch ausweicht, so daß der Befestigungsabschnitt 16 auf das Tragprofil 52 aufgedrückt, das heißt aufgeklemmt werden kann. Nach einer endfertigen Montage umgreift der Befestigungsabschnitt 16 das Tragprofil 52 klemmend, so daß dieser sicher vom Tragprofil gehalten ist.

Der Aufnahmeabschnitt 17 dient, wie gleichfalls Fig. 14 entnommen werden kann, der einendseitigen Aufnahme einer Latte 8, beispielsweise einer aus Holz gefertigten Federlatte. Zur Vermeidung ungewollter Kontaktgeräusche ist die Latte 8 einendseitig unter Zwischenordnung des Dämpfungselements 18 innerhalb des Aufnahmeabschnitts 17 angeordnet. Dabei nimmt der vom Aufnahmeabschnitt 17 bereitgestellte Aufnahmeraum 34 das Dämpfungselement 18 und der vom Dämpfungselement 18 bereitgestellte Aufnahmeraum 36 das lattenseitige Ende auf. Dabei ist der vom Aufnahmeabschnitt 17 bereitgestellte Aufnahmeraum 34 vorzugsweise derart bemessen, daß das Dämpfungselement 18 bei eingesetzter Latte 8 unter leicht elastischer Vorspannung steht, so daß eine verrutschsichere Anordnung des lattenseitigen Endes innerhalb des vom Aufnahmeabschnitt 17 bereitgestellten Aufnahmeraumes 34 gewährleistet ist.

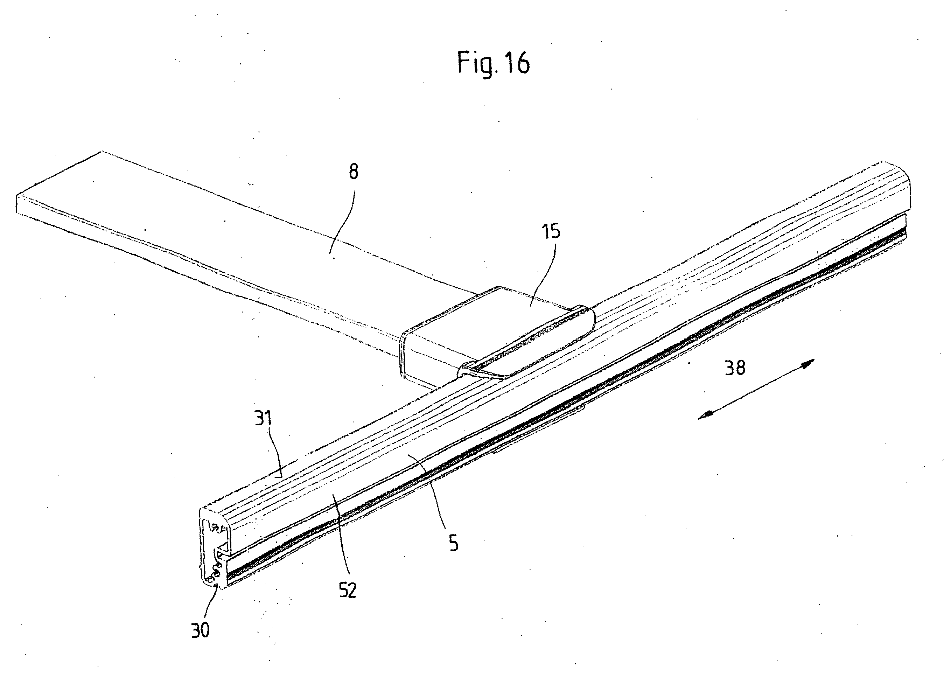

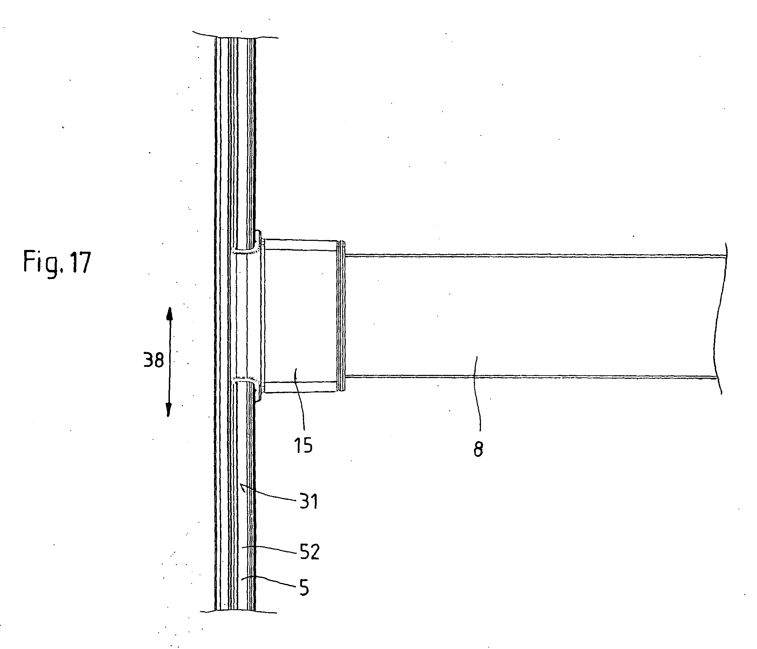

Zur weiteren Verdeutlichung des vorbeschriebenen Ausführungsbeispiels zeigen die Fign. 15, 16 und 17 jeweils verschiedene Ansichten eines an einem Tragprofil 52 angeordneten Halters 15. Wie diesen Fign. zu entnehmen ist, ist die am Tragprofil 52 ausgebildete und die die Rückhaltekante 29 des Halters 15 aufnehmende Nut 30 in Längsrichtung 38 des Tragprofils 52 durchgängig ausgebildet. Diese Ausgestaltung bietet die Möglichkeit, den Halter 15 im Bedarfsfall in Längsrichtung 38 zu verschieben, so daß eine gewünschte Position des Halters 15 und damit der vom Halter 15 getragenen Latte 8 ausgewählt werden kann. Die mittels des Befestigungsabschnitts 16 des Halters 15 aufgebrachte Klemmkraft ist dabei vorzugsweise dergestalt, daß ein ungewolltes Verschieben des Halters 15 relativ gegenüber dem Tragprofil 52 in dessen Längsrichtung 38 unterbunden ist. Für ein Verschieben des Halters 15 in Längsrichtung 38 bedarf es insofern eines gewissen Kraftaufwandes. Unter Aufbringung dieses Kraftaufwandes ist es aber möglich, den Halter 15 in einer beliebigen Stellung wahlweise zum Tragprofil 52 zu positionieren, was insbesondere insofern von Vorteil ist, als daß die Möglichkeit geschaffen wird, den Abstand zwischen zwei benachbarten und am Tragprofil 52 angeordneten Latten 8 individuell einstellen zu können.

Der erfindungsgemäße Halter 15 ist im übrigen insofern von Vorteil, als daß er es gestattet, die Latte 8 einerseits und das Tragprofil 52 andererseits aus unterschiedlichen Materialien zu bilden. Im gezeigten Ausführungsbeispiel besteht die Latte 8 beispielsweise aus Holz, wohingegen das Tragprofil 52 aus Aluminium gebildet ist. Der Halter 15 besteht seinerseits aus Kunststoff und erlaubt dank seiner vorbeschriebenen Ausgestaltung eine leichte Montage bzw. Demontage der im montierten Zustand am Tragprofil 52 angeordneten Latten 8.

Das in den Fign. 15 bis 17 gezeigte Tragprofil 52 ist Bestandteil eines in den Fign. 15 bis 17 nicht näher dargestellten Rahmens. Zur Anordnung einer Latte 8 an diesem Rahmen bedarf es zweier erfindungsgemäßer Halter 15. Eine jede vom Tragrahmen 2 getragene Latte 8 wird mittels zweier Halter 15 am Tragrahmen 2 befestigt, wobei die Latte 8 jeweils endseitig mit einem Halter 15 bestückt und am jeweils zugehörigen Tragprofil 52 des Tragrahmens 2 angeordnet ist.

Eine alternative Ausgestaltungsform des Halters 15 wird in Anlehnung an Fig. 3 erläutert. In einer Seitenansicht ist hier ausschnittsweise die schon vorbeschriebene Anordnung einer Latte 8 an einem Tragprofil 52 gezeigt. Die Latte 8 trägt gemäß diesem Ausführungsbeispiel ihrerseits Funktionselemente 53 in Form von Federelementen 9, von denen eines in Fig. 3 dargestellt ist. In ihrer Gesamtheit bildet eine Mehrzahl der Funktionselemente 53 eine Auflagerfläche für eine Matratze, ein Polsterelement oder dergleichen, wie dies in Fig. 1 gezeigt ist. Die Matratze, das Polsterelement oder dergleichen wird also nicht direkt auf die Latten 8 aufgelegt. Zwischen den Latten 8 und der von diesen aufgenommenen Matratze, Polsterelemente oder dergleichen sind vielmehr die Funktionselemente 53 zwischengeordnet. Der besseren Übersicht wegen ist in Fig. 3 die Matratze, das Polsterelement oder dergleichen nicht dargestellt..

Um eine in der Höhe insgesamt wenig aufbauende Konstruktion bereitzustellen, kann der Aufnahmeabschnitt 17 des Halters 15 in Höhenrichtung, das heißt mit Bezug auf die Blattebene nach Fig. 3 relativ zum Befestigungsabschnitt 16 etwas weiter nach unten versetzt sein, als in der anhand der vorangegangenen Fign. erläuterten Ausführungsform. Durch diese etwas weiter nach unten versetzte Anordnung des Aufnahmeabschnitts 17 wird erreicht, daß die Oberseite des federelastisch ausgebildeten Funktionselements 53 im wesentlichen bündig mit dem oberen Schenkel 27 des Befestigungsabschnitts 16 abschließt, wenn das Funktionselement 53 nach Auflage einer Matratze, eines Polsterelements oder dergleichen der Gewichtskraft folgend etwas zusammengedrückt ist.

Das in Form eines Federelements 9 ausgebildete Funktionselement 53 besteht aus einem Federkörper 10 einerseits und einer Kopfplatte 11 andererseits. Dabei ist die Kopfplatte 11 vorzugsweise auswechselbar am Federkörper 10 angeordnet. Der Federkörper 10 verfügt seinerseits über wendelförmig ausgebildete Federarme 13, wobei der Federkörper 10 mit Bezug auf seine Höhenrichtung 19 eine kegelförmige Gestalt aufweist, wie insbesondere Fig. 3 erkennen läßt.

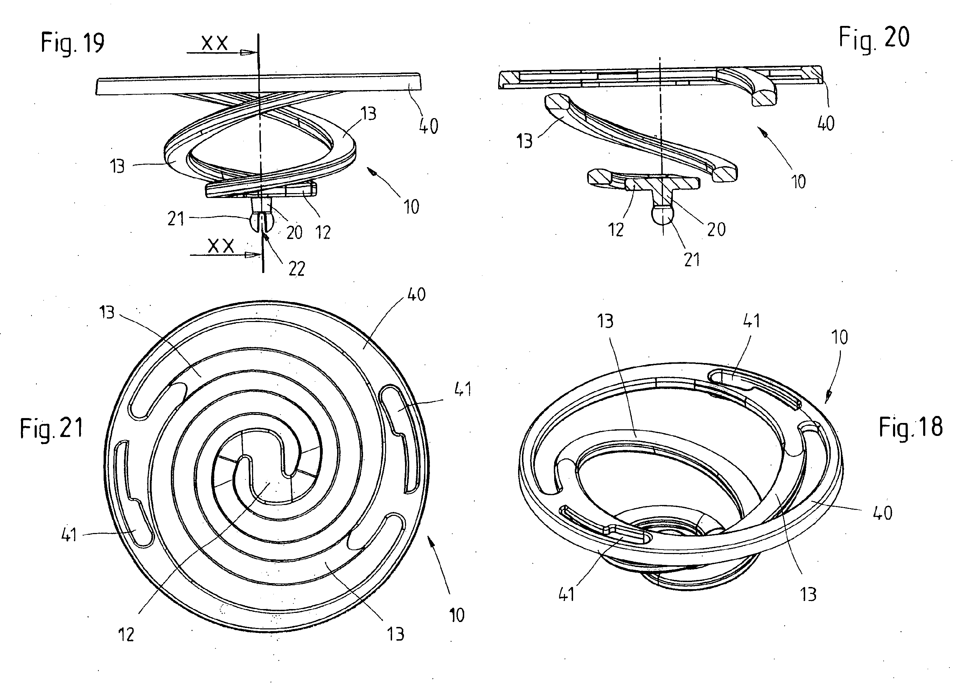

Die Fign. 18 bis 21 zeigen im Detail den Federkörper 10 des Federelements 9.

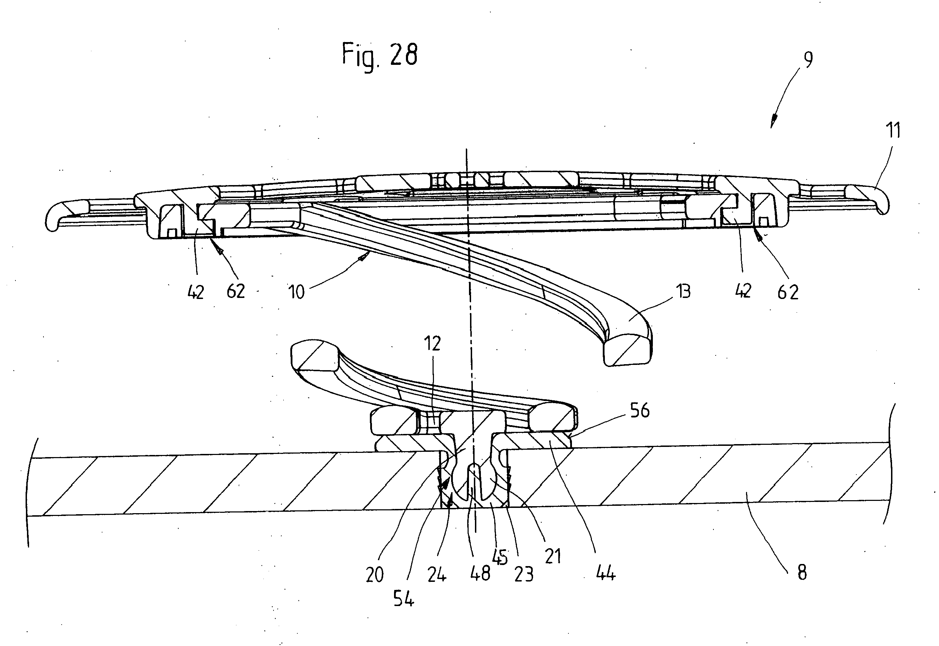

Wie den Fign. 18 bis 21 zu entnehmen ist, besteht der Federkörper 10 aus einer Basis, das heißt einem Basisabschnitt 12, an welche sich wendelförmig ausgebildete Federarme 13 anschließen. An dem der Basis 12 gegenüberliegenden Ende des Federkörpers 10 laufen die Federarme 13 zu einem Ring 40 zusammen. Dieser Ring 40 weist Ausnehmungen 62 auf, die der Anordnung einer im weiteren noch zu beschreibenden Kopfplatte 11 dienen, wie Fig. 28 zu entnehmen ist.

Zur Anordnung des Federelements 9 an einer Latte 8 trägt die Basis 12 lattenseitig einen Verbindungsabschnitt 20 in Form eines stiftförmigen Fortsatzes. Im montierten Zustand greift dieser Verbindungsabschnitt 20 in einen vom Zwischenelement 24 oder auch Verbindungselement 54 bereitgestellten Aufnahmeraum 60 ein, wobei der Aufnahmeraum 60 des Verbindungselements 54 korrespondierend zum Verbindungsabschnitt 20 des Federelements 9 ausgebildet ist.

Der Verbindungsabschnitt 20 trägt lattenseitig eine kugelförmige Erweiterung in Form eines Kopfes 21. Dessen Funktion wird im weiteren noch näher beschrieben.

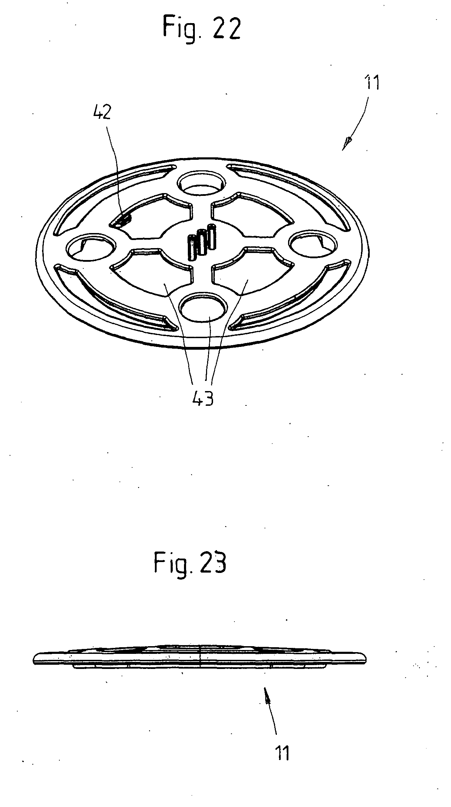

Die Fign. 22 und 23 zeigen die Kopfplatte 11 des Federelements 9. Zur Anordnung der Kopfplatte 11 am Federkörper 10 trägt die Kopfplatte 11 unterseitig Rastnasen 42, die, wie insbesondere Fig. 28 entnommen werden kann, hakenförmig ausgebildet sind und im montierten Zustand in die vom Ring 40 des Federkörpers 10 bereitgestellten Ausnehmungen 62 eingreifen.

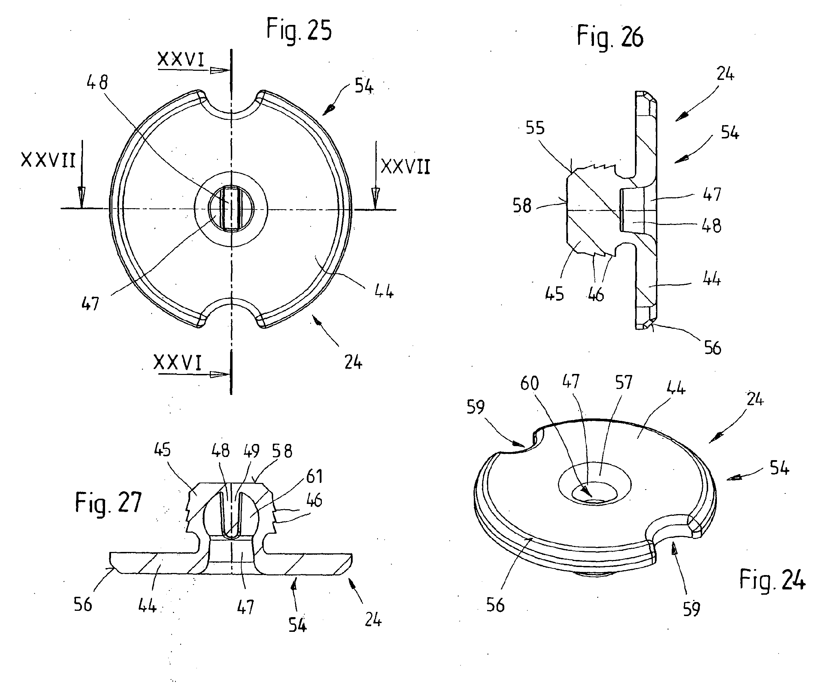

Wie bereits schon vorstehend erläutert, wird das Federelement 9 unter Zwischenordnung des Zwischenelements 24, das heißt des Verbindungselements 54 an dem lattenförmig ausgebildeten Tragelement 24, das heißt der Latte 8 angeordnet. Eine Detaildarstellung des Verbindungselements 54 zeigen die Fign. 24 bis 27.

Wie den Fign. 24 bis 27 zu entnehmen ist, ist das Verbindungselement 54 als einstückiges Bauteil ausgebildet. Es besteht vorzugsweise aus einem weichelastischen, das heißt elastisch verformbaren Kunststoffmaterial.

Das Verbindungselement 54 verfügt über einen ersten Abschnitt in Form eines Basisabschnitts 45. Bevorzugterweise weist der Basisabschnitt 45 einen im wesentlichen kreisförmigen Querschnitt auf. Im montierten Zustand, wie dieser in Fig. 28 dargestellt ist, ist das Verbindungselement 54 mit seinem Basisabschnitt 45 in eine an der Latte 8 ausgebildete Bohrung 23 eingesetzt. Zwecks verdrehsicherer Anordnung des Verbindungselements 54 innerhalb der von der Latte 8 bereitgestellten Bohrung 23 verfügt der Basisabschnitt 45 außenumfangsseitig über Rastmittel 46, wie diese insbesondere den Fign. 26 und 27 entnommen werden können.

Das Verbindungselement 54 verfügt des weiteren über einen zweiten Abschnitt in Form eines Aufsatzabschnitts 44. Der Aufsatzabschnitt 44 ist im wesentlichen plattenförmig ausgebildet und kommt im montierten Zustand oberseitig der Latte 8 zwischen Latte 8 einerseits und Basisabschnitt 12 des Federelements 9 zu liegen, wie dies insbesondere Fig. 28 entnommen werden kann. Dank des plattenförmigen Aufsatzabschnitts 44 kommt das Federelement 9 also nicht in direkten Auflagekontakt mit der Latte 8, so daß ungewollte Klapper- und/oder Kontaktgeräusche vermieden werden können. Der Aufsatzabschnitt 44 des Verbindungselements 54 kann insofern als Dämpfungselement bezeichnet werden.

Der Basisabschnitt 45 des Verbindungselements 54 stellt einen Aufnahmeraum 60 bereit, der über eine kugelförmige Erweiterung 61 verfügt. Dabei ist die kugelförmige Erweiterung 61 korrespondierend zum Kopf 21 des Verbindungsabschnitts 20 des Federelements 9 ausgebildet. Der Aufsatzabschnitt 44 des Verbindungselements 54 verfügt über eine Durchgangsbohrung 47, über welche der vom Basisabschnitt 45 bereitgestellte Aufnahmeraum 60 bei einem Einstecken des Verbindungsabschnitts 20 des Federelements 9 in das Verbindungselement 54 erreichbar ist.

Im montierten Zustand, der in Fig. 28 gezeigt ist, ist ein Federelement 9 unter Zwischenordnung des erfindungsgemäßen Verbindungselements 54 an einer Latte 8 angeordnet. Die Latte 8 verfügt über eine Bohrung 23, in die der Basisabschnitt 45 des Verbindungselements 54 dank der am Basisabschnitt 45 angeordneten Rastmittel 46 verdrehsicher angeordnet ist. Der vom Basisabschnitt 45 des Verbindungselements 54 bereitgestellte Aufnahmeraum 60 dient der Aufnahme des Verbindungsabschnitts 20 des Federelements 9, welcher an der Basis 12 des Federelements 9 verbindungselementseitig angeordnet ist. Im montierten Zustand greift der verbindungselementseitig am Verbindungsabschnitt 20 angeordnete Kopf 21 in die kugelförmige Erweiterung 61 des Aufnahmeraums 60 ein. Der Verbindungsabschnitt 20 des Federelements 9 wird insofern nach Art eines Kugelgelenkzapfens vom Verbindungselement 54 getragen, was es in vorteilhafter Weise erlaubt, daß das Federelement 9 neigungsfähig gegenüber der Latte 8 gelagert ist. Zur Erzielung einer verdrehsicheren Anordnung des Federelements 9 gegenüber dem Verbindungselement 54 verfügt der Basisabschnitt 45 des Verbindungselements 54 über einen Steg 48, der, wie insbesondere Fig. 27 erkennen läßt, in den vom Basisabschnitt 45 bereitgestellten Aufnahmeraum 40 hineinragt. Dieser stegförmige Fortsatz 29 greift im montierten Zustand in einen im Kopf 21 des Verbindungsabschnitts 20 ausgebildeten Schlitz 22 ein, wie dies insbesondere Fig. 28 entnommen werden kann.

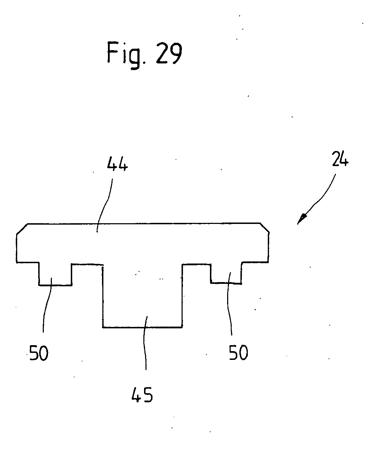

Eine alternative Ausführungsform des Verbindungselements 1 zeigt Fig. 29. Zu erkennen ist hier, daß das Verbindungselement 54 zwecks einer verdrehsicheren Anordnung an einer als Tragelement dienenden Latte 8 unterseitig zwei dornenförmige Fortsätze 50 trägt. Im montierten Zustand greifen diese Dorne 50 in entsprechende, in der Latte 8 ausgebildete Ausnehmungen ein. Im übrigen entspricht die Ausgestaltung des in Fig. 29 gezeigten Verbindungselements 54 der vorbeschriebenen.

Ein Lattenrost, wie er ausschnittsweise in Fig. 2 gezeigt ist, verfügt über eine Mehrzahl von Latten 8. Dabei trägt eine jede Latte 8 eine Vielzahl von Federelementen 9, wobei ein jedes Federelement 9 jeweils unter Zwischenordnung eines erfindungsgemäßen Verbindungselements 54 an der jeweiligen Latte 8 angeordnet ist. Die Mehrzahl der vom Lattenrost bereitgestellten Federelemente 9 bildet in ihrer Gesamtheit ein Auflager für die vom Lattenrost aufzunehmende Matratze oder für das vom Lattenrost aufzunehmende Polsterelement. Dabei stützt sich die Matratze, das Polsterelement oder dergleichen auf den Kopfplatten 11 der Federelemente 9 ab, wobei für eine optimierte Hinterlüftung der aufgenommenen Matratze, des aufgenommenen Polsterelements oder dergleichen in der Kopfplatte 11 Durchbrüche 43 ausgebildet sind, die als Hinterlüftungsöffnungen dienen.

Ein jedes Federelement 9 ist dank des Verbindungselements 54 verdrehsicher an der jeweiligen Latte 8 angeordnet, wobei in vorteilhafter Weise eine neigungsfähige Lagerung der Federelemente realisiert ist. Zum Zwecke einer vereinfachten Montage verfügt ein jedes Verbindungselement 54 über Griffmulden 59, wie in Fig. 24 dargestellt. Das Verbindungselement 54 kann über diese Griffmulden 59 ergriffen und basisabschnittseitig in eine an der Latte 8 ausgebildete Bohrung 23 eingesetzt werden, wie in Fig. 28 gezeigt. Alsdann ist das Federelement mit seinem Verbindungsabschnitt 20 voran durch die im Aufsatzabschnitt 44 des Verbindungselements 54 -ausgebildete Durchgangsbohrung 47 hindurch in den vom Basisabschnitt 45 des Verbindungselements 54 bereitgestellten Aufnahmeraum 60 einzuführen. Im montierten Zustand, wie dieser in Fig. 28 gezeigt ist, ist das Federelement 9 auswechselbar mit dem Verbindungselement 54 und damit mit der Latte 8 verbunden. Die Verbindung von Federelement 9 einerseits und Verbindungselement 54 andererseits ist verdrehsicher, ebenso wie die Verbindung zwischen Verbindungselement 54 einerseits und Latte 8 andererseits, so daß insgesamt eine verdrehsichere Anordnung des Federelements 9 an der Latte 8 sichergestellt ist. Gleichwohl ist das Federelement 9 neigungsfähig gegenüber der Latte 8 gelagert, was zu einem verbesserten Sitz- und/oder Liegekomfort führt. Von Vorteil des Verbindungselements 54 ist des weiteren, daß mittels des Aufsatzabschnittes 44 ein Dämpfungselement bereitgestellt wird, so daß ein direkter Materialkontakt von Federelement 9 und Latte 8 nicht stattfindet, was unerwünschte Kontakt- und/oder Klappergeräusche zwischen Federelement 9 einerseits und Latte 8 andererseits verhindert.

Das Verbindungselement 54 ist vorzugsweise einstückig ausgebildet und besteht aus einem elastischen Kunststoffmaterial. Zum Zwecke der vereinfachten Montage trägt der Basisabschnitt 45 des Verbindungselements 54 lattenseitig eine Fase 55, was ein erleichtertes Einführen des Basisabschnitts 45 in eine korrespondierend an der Latte 8 ausgebildete Bohrung 23 ermöglicht. Zudem trägt der Aufsatzabschnitt 44 eine Fase 56.

Zum Zwecke der vereinfachten Einführung des Verbindungsabschnitts 20 des Federelements 9 durch die vom Aufsatzabschnitt 44 des Verbindungselements 54 bereitgestellte Durchgangsbohrung 47 hindurch in den vom Basisabschnitt 45 des Verbindungselements 54 bereitgestellten Aufnahmeraum 60 kann die Durchgangsbohrung 47 des Aufsatzabschnitts 44 federelementseitig über einen trichterförmigen Einlaßbereich 57 verfügen.

Der Basisabschnitt 45 des Verbindungselements 54 weist in Höhenrichtung 19 eine Dimensionierung auf, die im wesentlichen der Dicke eines lattenförmigen Tragelements 8 entspricht. Damit ist sichergestellt, daß die untere Abschlußfläche 58 des Basisabschnitts 45 im montierten Zustand mit der unteren Abschlußfläche der Latte 8 bündig abschließt, wie dies insbesondere Fig. 28 entnommen werden kann.

Mit dem erfindungsgemäßen Lattenrost wird insgesamt ein einfach zu montierender, einfach zu handhabender und höchsten Qualitätsansprüchen genügender Lattenrost bereitgestellt. Der Lattenrost 1 besteht aus einem Tragrahmen 2, der Latten 8 trägt. Diese wiederum tragen auswechselbar daran angeordnete Federelemente 9. Zur Anordnung der Latten 8 am Tragrahmen 2 dienen Halter 15, wobei die Halter 15 auf die jeweils zugehörigen Profile 5 des Tragrahmens 2 aufgeklemmt sind. Dabei liegen die Halter 15 mit ihren Befestigungsabschnitten am zugehörigen Profil formschlüssig an, das heißt die Innenseite 28 des U-förmig ausgebildeten Befestigungsabschnitts entspricht in ihrer Kontur der Außenkontur 31 des Profils 5. Erfindungsgemäß bestehen dabei die Latten 8 aus Holz und die Federelemente 9 aus Kunststoff. Der Tragrahmen besteht vorzugsweise aus Aluminium. Als Material für die Halter eignet sich insbesondere Kunststoff.

### Bezugszeichenliste

- 1: Lattenrost
- 2: Tragrahmen
- 3: Halterahmen
- 4: Profil
- 5: Profil
- 6: Verbinder
- 7: Verbinder
- 8: Latte
- 9: Federelement
- 10: Federkörper
- 11: Kopfplatte
- 12: Basisabschnitt
- 13: Federarm
- 14: Rahmensegment
- 15: Halter
- 16: Befestigungsabschnitt
- 17: Aufnahmeabschnitt
- 18: Dämpfungselement
- 19: Höhenrichtung
- 20: Verbindungsabschnitt
- 21: Kopf
- 22: Schlitz
- 23: Bohrung
- 24: Zwischenelement
- 25: Basis
- 26: Schenkel
- 27: Schenkel
- 28: Innenseite
- 29: Rückhaltekante
- 30: Nut
- 31: Außenkontur
- 32: Anschlußsteg
- 33: Nut
- 34: Aufnahmeraum
- 35: Rand
- 36: Aufnahmeraum
- 37: Rippe
- 38: Längsrichtung
- 39: Grundkörper
- 40: Ring
- 41: Ausnehmung
- 42: Rastnase
- 43: Durchbruch
- 44: Aufsatzabschnitt
- 45: Basisabschnitt
- 46: Rastmittel
- 47: Durchgangsbohrung
- 48: Steg
- 49: Erweiterung
- 50: Dorn
- 51: Schwenkbewegung
- 52: Tragprofil
- 53: Funktionselement
- 54: Verbindungselement
- 55: Fase
- 56: Fase
- 57: Einlaßbereich
- 58: Abschlußfläche
- 59: Griffmulde
- 60: Aufnahmeraum
- 61: Erweiterung
- 62: Ausnehmung

## Patentansprüche

1. Lattenrost mit einem Tragrahmen (2) und daran angeordneten Latten (8),
**dadurch gekennzeichnet,**
**daß** die Latten (8) ihrerseits daran auswechselbar angeordnete Federelemente (9) tragen, wobei die Latten (8) aus Holz und die Federelemente (9) aus Kunststoff bestehen.

2. Lattenrost nach Anspruch 1, **dadurch gekennzeichnet, daß** der Tragrahmen (2) aus Metall, vorzugsweise Aluminium gebildet ist.

3. Lattenrost nach Anspruch 1 oder 2, **gekennzeichnet durch** einen Halterahmen, der den Tragrahmen (2) aufnimmt.

4. Lattenrost nach Anspruch 1, 2 oder 3, **dadurch gekennzeichnet, daß** der Tragrahmen (2) Rahmensegmente (14) aufweist.

5. Lattenrost nach Anspruch 4, **dadurch gekennzeichnet, daß** die Rahmensegmente (14) relativ zueinander verschwenkbar am Halterahmen (3) angeordnet sind.

6. Lattenrost nach einem der vorhergehenden Ansprüche, **gekennzeichnet durch** einen Halter (15) zur einendseitigen Anordnung einer Latte (8) am Tragrahmen (2).

7. Lattenrost nach Anspruch 6, **dadurch gekennzeichnet, daß** der Halter (15) einen Befestigungsabschnitt (16) einerseits und einen Aufnahmeabschnitt (17) andererseits aufweist, wobei der Befestigungsabschnitt (16) und der Aufnahmeabschnitt (17) als einstückiges Bauteil ausgebildet sind.

8. Lattenrost nach Anspruch 6 oder 7, **dadurch gekennzeichnet, daß** der Halter (15) als Spritzgußteil aus Kunststoff besteht.

9. Lattenrost nach Anspruch 6, 7 oder 8, **dadurch gekennzeichnet, daß** der Halter (15) ein in den Aufnahmeabschnitt (17) einsetzbares Dämpfungselement (18) aufweist.

10. Lattenrost nach einem der vorhergehenden Ansprüche, **dadurch gekennzeichnet, daß** das Federelement (9) einen Federkörper (10) und eine daran auswechselbar angeordnete Kopfplatte (11) aufweist.

11. Lattenrost nach Anspruch 10, **dadurch gekennzeichnet, daß** der Federkörper (10) Federarme (13) aufweist, die sich ausgehend von einem Basisabschnitt (12) wendelförmig in Höhenrichtung (19) nach oben erstrecken.

12. Lattenrost nach Anspruch 11, **dadurch gekennzeichnet, daß** der Basisabschnitt (12) lattenseitig einen stiftförmigen Fortsatz (20) trägt.

13. Lattenrost nach Anspruch 12, **dadurch gekennzeichnet, daß** der stiftförmige Fortsatz (20) lattenseitig eine kugelförmige Erweiterung (21) trägt.

14. Lattenrost nach Anspruch 13, **dadurch gekennzeichnet, daß** die kugelförmige Erweiterung (21) lattenseitig geschlitzt ausgebildet ist.

15. Lattenrost nach einem der vorhergehenden Ansprüche, **dadurch gekennzeichnet, daß** die Latten (8) Durchgangsbohrungen (18) zur Aufnahme des stiftförmigen Fortsatzes (20) der Federelemente (9) aufweisen.

16. Lattenrost nach einem der vorhergehenden Ansprüche, **gekennzeichnet durch** ein elastisches Zwischenelement (24) zur Zwischenordnung zwischen einer Latte (8) einerseits und einem Federelement (9) andererseits.

17. Lattenrost nach einem der vorhergehenden Ansprüche, **dadurch gekennzeichnet daß** eine Latte (8) eine Vielzahl von Federelementen (9) trägt.

18. Lattenrost nach einem der vorhergehenden Ansprüche, **dadurch gekennzeichnet, daß** eine Mehrzahl von Federelementen (9) eine Auflagefläche zur Aufnahme einer Matratze, eines Polsters oder dergleichen bildet.

19. Bett, insbesondere Kranken- und/oder Pflegebett mit einem Lattenrost (1) nach einem der vorhergehenden Ansprüche 1 bis 18.
